# EUROPEAN PATENT APPLICATION

(11) **EP 1 666 138 A1**
(43) Date of publication of application: **07.06.2006**
(21) Application number: 06001588.0
(22) Date of filing: 25.04.2003
(51) Int. Cl.: B01J 19/12

(54) **Device for treating by photocatalysis a swirling fluid**

(62) Divisional of application: 03009378.5
(71) Applicant: Wong, Tommy Chi-Kin, Kowloon, Hong Kong (CN)
(72) Inventor: Wong, Tommy Chi-Kin, Kowloon, Hong Kong (CN)
(74) Representative: Haft, von Puttkamer, Berngruber, Czybulka

(57) **Abstract**

A turbine-boosted photocatalysis fluid processor that makes the fluid that flows inside form a high-speed whirlpool so as to enhance both the sterilization effect of die ultraviolet-radiation and the photocatalysis effect. The high-speed whirlpool also improves die degradation of organic contaminants and reduces the frequency maintenance of the quartz sleeve (2). The ultraviolet-radiation indicator (42) and die color scale (43) with different shades of colors positioned together are convenient for users to measure the intensity of die ultraviolet-radiation so as to avoid the loss of effectiveness of the photocatalysis fluid processor caused by aging or damage of the ultraviolet-radiation lamp (21).

## Description

### BACKGROUND OF THE INVENTION

### (a) Field of the invention

The present invention relates to a photocatalysis fluid processor, especially to a turbine-boosted photocatalysis fluid processor that makes the fluid flow inside form a whirlpool spinning at a high speed so as to improve both the sterilization effect of the ultraviolet-radiation and the photocatalysis effect.

### (b) Description of the Prior Art

A common ultraviolet-radiation lamp processor or photocatalysis fluid processor has an ultraviolet-radiation lamp installed inside a quartz sleeve. The inner surface of the tube being illuminated is coated with a layer of photocatalyst. The amount of the fluid flowing through the tube depends on the total energy of the ultraviolet radiation emitted from the lamp and the total area of the surface of the tube coated with photocatalyst. When a fluid flows through the tube, the ultraviolet light radiates the organism inside the fluid and kills them directly or by reacting with the photocatalyst, free radicals such as OH radicals am produced for photocatalysis so as to degrade organic pollutants.

The structure of the conventional tube unit is only a tube through which fluid flows. When the fluid flow directly passes through the interior, die flow rate of die fluid is inconsistent due to the restriction of the flow amount. Owing to the inconsistency of the fluid flow rate, the slow-flowing fluid inside the tube unit is not blended properly, resulting in inconsistent exposure time of ultraviolet radiation and photocatalysis while the fluid is being processed. Moreover, when die fluid passes by the tube unit, die cross-sectional area of passage is larger than die cross-sectional area of die fluid inlet tube, so the flow rate is slowed, resulting in accumulation of dirt onto die wall of die quartz sleeve. Thus the penetration of die ultraviolet-radiation is obstructed and reduced while the total energy of ultraviolet radiation absorbed by the photocatalyst is also decreased. Therefore the total efficiency is decreased. In addition, as the ultravioletradiation lamp ages, the intensity of die ultraviolet light emitted is unstable and can't be measured by the human eye, it can only be measured by expensive devices measuring die intensity of the ultraviolet light or by calculating die age
of the ultraviolet- radiation lamp being used, in order to determine whether die photocatalysis fluid processor is working properly.

### SUMMARY OF THE INVENTION

The main objective of the present invention is to provide a turbine-boosted photocatalysis fluid processor by which the fluid flowing into it forms a high-speed whirlpool even if the flow rate of fluid is restricted, enabling sufficient blending of the processed fluid, self-cleaning of die wall of the tube, and the uniform ultraviolet-radiation of the organisms in the fluid. Furthermore, the area of photocatalysis is also enlarged. In addition, the loss of effectiveness of the photocatalysis fluid processor due to the aging or damage of the ultraviolet-radiation lamp can be avoided.

In order to achieve die objective mentioned above and avoid the shortcomings of the prior art, die present invention includes a quartz sleeve installed inside a tube unit coated with photocatalyst on the inner side thereof. Inside the quartz sleeve is an ultraviolet-radiation lamp. At die upper and lower end of die tube unit is respectively a fluid inlet tube and a fluid outlet tube. The upper end of the tube unit with die fluid inlet tube can be separated with the tube unit coated with die photocatalyst. A speed-accelerating mechanism having a plurality of diversion channels is positioned on one end of the fluid inlet tube of the tube unit. The total area of a fluid outlet hole of the diversion channel is smaller than the cross-sectional area of die passage of the fluid inlet tube. Between die tube unit and die quartz sleeve, a plurality of photocatalysis-enhancing devices are positioned in parallel.

Compared with the prior art, fluid flowing through the present invention forms a whirlpool spinning at high speed so that the fluid being treated by photolysis is blended adequately, not only enhancing the efficiency of photocatalysis, sterilization and degradation of organic contaminants, but also reducing the maintenance frequency. The round shape of the photocatalysis-enhancing device increases the desired effect. The disadvantage of the frequent cleaning of the quartz sleeve in conventional units is also solved. In addition, on the connection part between the tube unit with the fluid inlet tube and the tube unit coated with phtotocatalyst, a circular lock is installed for the convenience of changing the direction of the fluid outlet during maintenance. As to the ultraviolet-radiation indicator, ii converts the ultraviolet light to visible light without an outside power source for users to eye-measure the intensity of the ultraviolet light. Thus the loss of effectiveness the fluid processor caused by aging or damage to the ultraviolet-radiation lamp can be avoided.

By the present invention, a whirlpool spinning at a high speed is formed inside the photocatalysis-enhancing devices or between the quartz sleeve and the photocatalysis-enhancing device no matter whether the flow rate of the fluid is low or high. Thus the fluid for the sterilizing function can be blended properly and contact the photocatalyst on the inner wall of the tube unit and on the photocatalysis-enhancing devices equally so as to increase the degradation effect of photocatalysis. By a plurality of photocatalyst layers on different positions, the photocatalysis area is enlarged in order to achieve maximum effect. Therefore, the ultraviolet light radiates organisms inside the fluid being processed equally, thus enhancing the sterilizing effect. The shortcoming of the frequent cleaning of the quartz sleeve is also solved by the flushing effect of the high-speed whirlpool. The ultraviolet-radiation indicator is used to avoid the loss of effectiveness of the photocatalysis fluid processor caused by aging a damage to the ultraviolet-radiation lamp.

### BRIEF DESCRIFTION OF THE DRAWINGS

The accomplishment of the above-mentioned object of the present invention will become apparent from Ute following description and its accompanying drawings which show by illustration the embodiment of Ute present inventions as follows:
Fig. 1 is an explosive view of the present invention;
Fig. 2 is a cross-seetional view of the present invention when assembled; Fig. 3 is a transverse cross-sectional view of the diversion mechanism of the present invention;
Fig. 4 -I is a schematic drawing of Ute bottom of an ultraviolet-radiation indicator when assembled;
Fig. 4 -2 is a lateral view of the ultraviolet-radiation indicator er the present invention;
Fig. 4 -3 is a perspective view of the ultraviolet-radiation indicator of Ute present invention;
Fig. 5 -1 is a schematic drawing of inner and outer wire-mesh tubes of a photocatalysis-enhancing device of the present invention;
Fig. 5-2 is a cross-sectional view of the photocatalysis-enhancing device of the present invention.

### DETAILED DESCRIPTION OF THE PREFERRED EMBODIMENT

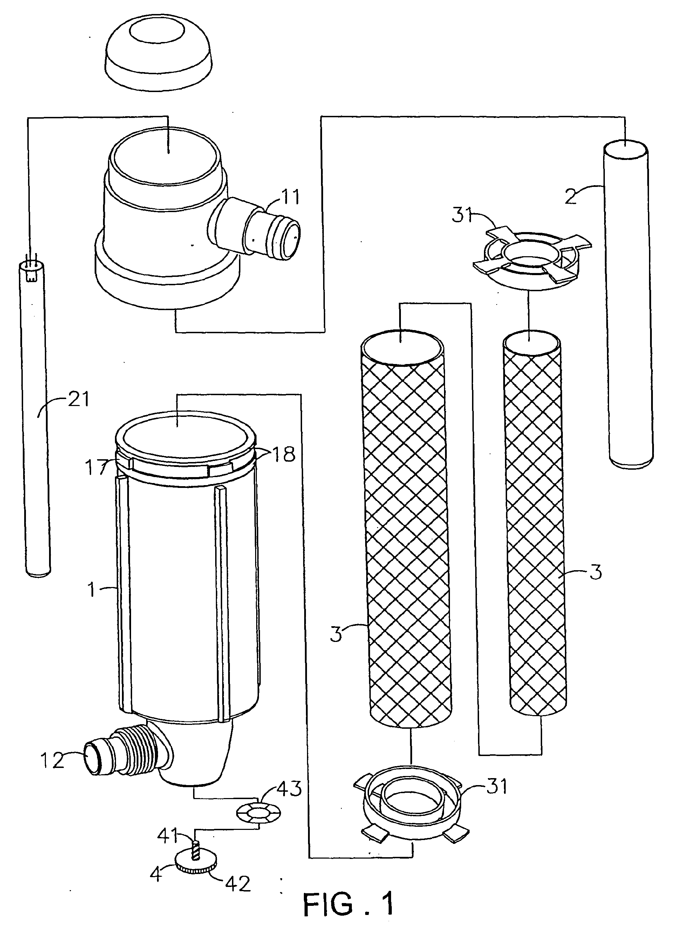

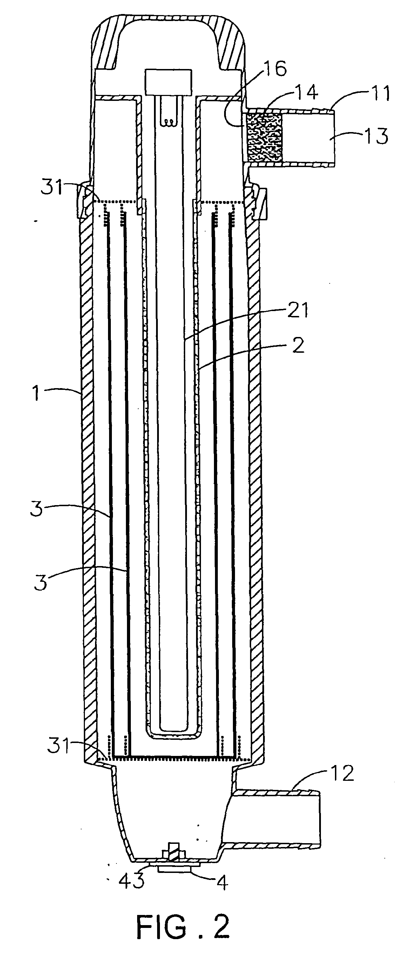

Refer to Fig. 1 & Fig.2, a turbine-boosted photocatalysis fluid processor includes a quartz sleeve 2 positioned inside a tube unit 1 coated with photocatalyst on the inner side thereof and an ultraviolet-radiation lamp 21 is installed inside the quartz sleeve 2. A plurality of photocatalysis enhancing device 3 which is coated with the photocatalyst on the surface thereof is positioned parallel between the tube unit 1 and the quartz sleeve 2. According to the different characteristics of the fluid being processed, various combinations of photocatalyst are coated on the photocatalysis-enhancing device 3. The chemical element of photocatalyst is a semiconductor material such as cadmium sulfide, iron oxide, molybdenum trioxide, titanium dioxide, tungsten trioxide, Zinc oxide (Cds, Fe203, Mo03, Ti02, W03, ZnO ) in nano-scale. On the top and the bottom of the photocatalysis-enhancing device 3, a fixing ring 31 is installed therein respectively. On the upper and lower ends of the tube unit 1, a fluid inlet tube 11 and a fluid outlet tube 12 are mounted therein respectively.

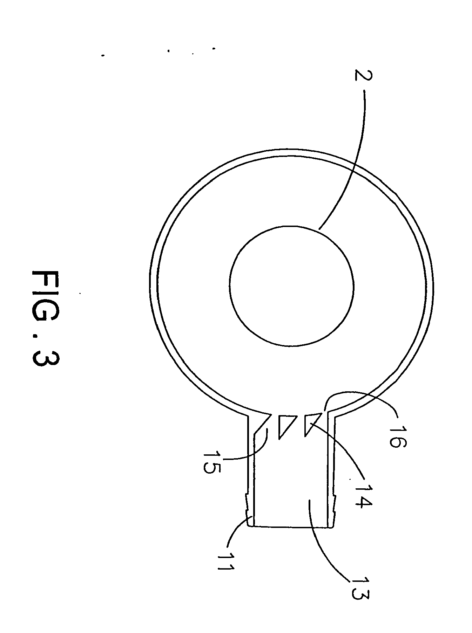

A speed-accelerating mechanism 14, as shown in Fig.3, is positioned on one end of the fluid inlet tube 11 of the tube unit 1. The speed-accelerating mechanism 14 is composed of a plurality of diversion channel 15 whose inclination angle (the angle between the center of the quartz sleeve 2 and the speed-accelerating mechanism 14 ) ranging from 91 to 179 degrees. The total area of a fluid outlet hole 16 of the diversion channel 15 is smaller than the cross-sectional area of the passage of the fluid inlet tube 11 so as to form a fluid-pressurizing chamber 13 on front side of the fluid inlet tube 11. Thus when the fluid flow through the diversion channels 15, the fluid is discharged from the fluid outlet hole 16 in a specific angle and in high speed. Then the fluid forms a whirlpool spinning at a high speed inside .the photocatalysis-enhancing device 3, between the tube unit 1 and the photocatalysis-enhancing device 3, between the quartz sleeve 2 and the photocatalysis-enhancing device 3. Therefore, the fluid that needs photocatalysis can be blended properly. In the meantime, the fluid spinning at high speed flushes the wall of the quartz sleeve 2 thus reducing the need for frequent cleaning of the quartz sleeve 2.

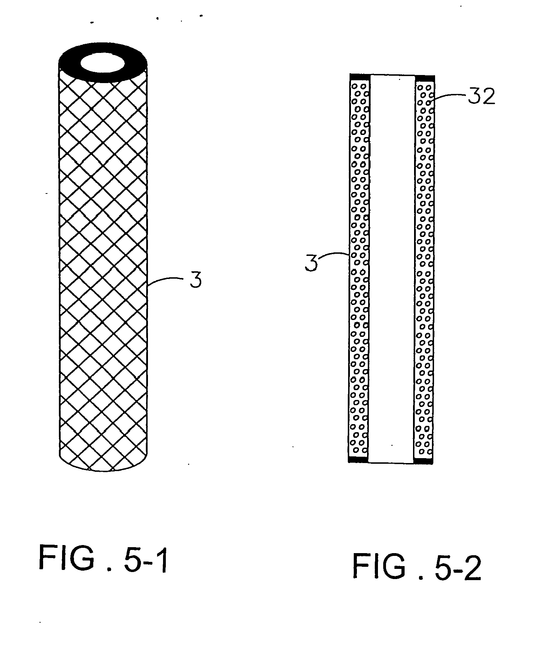

The photocatalysis-enhancing devices 3 have a plurality of wires with photocatalyst, intercrossed into cylindroids (as shown in Fig. 5-1). The photocatalysis-enhancing device 3 is a wire-mesh tube. The photocatalysis-enhancing device 3 can also be composed of an inner and an outer wire-mesh tube which are sealed on the top and the bottom side for accommodating granular carriers of photocatalyst 32 there between (as shown in Fig.5-2).

A four-direction circular lock 17 is positioned on the connection area between the upper side of die tube unit 1 with die fluid inlet tube 11 and the tube unit 1 coated with photocatalyst on the inner side thereof for die convenience of changing die direction of fluid outlet during die maintenance operation. Two four-direction fixing rings 18 are arranged on die top and bottom of die circular lock 17 respectively so as to avoid die displacement caused by water pressure which could result in leaks.

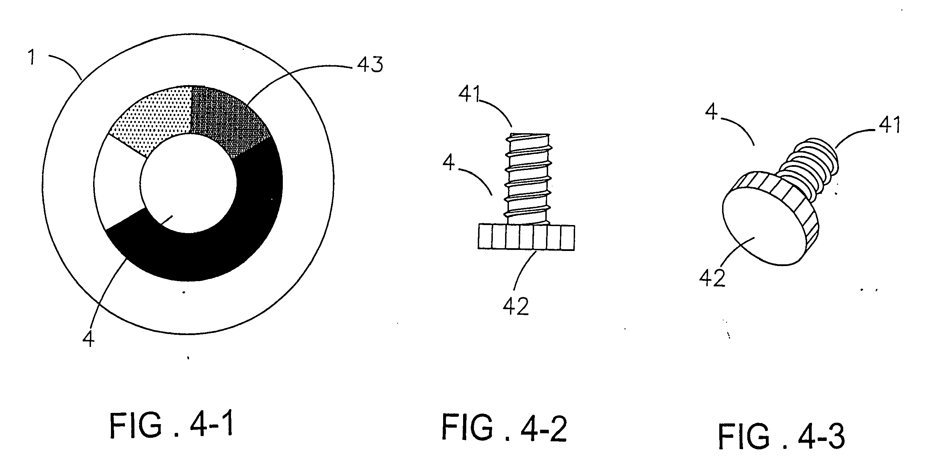

Refer to Fig.4 -1, Fig4 - 2 & Fig4 - 3, an ultraviolet-radiation indicator 4 comprises an illuminated column 41 and an illuminant plane 42. The reactant inside die illuminated column 41 reacts with die ultraviolet light and emits die visible light, radiating from die illuminant plane 42. The reactant converting the ultraviolet light into the visible light is a fluorescent phosphor. With the reference of a color scale 43 with different shades of colors next to the ultraviolet-radiation indicator 4, users can know the intensity of die ultraviolet-radiation so as to avoid die loss of effectiveness of the present invention when die ultraviolet-radiation lamp 21 is old or damaged.

The present invention makes the fluid being processed blend properly so as to enhance die sterilization effect and the degradation effect of the organic pollutant inside die fluid as well as the reduction of die frequency of maintenance. Moreover, die fluid spinning at high speed flushes the outer wall of die quartz sleeve 2 making it unnecessary to clean die quartz sleeve 2 frequently.

It should be noted that the above description and accompanying drawings are only used to illustrate some embodiments of the present invention, not intended to limit the scope thereof. Any modification of the embodiments should fall within the scope of the present invention.

## Claims

1. A turbine-boosted photocatalysis fluid processor comprising a quartz sleeve installed inside a tube unit coated with photocatalyst on the inner thereof, and an ultraviolet-radiation lamp positioned inside the quartz sleeve, a fluid inlet tube and a fluid outlet tube are positioned respectively at the upper and lower end of the tube unit, **characterized in that** it comprises an ultraviolet-radiation indicator for indicating the intensity of ultraviolet light.

2. The turbine-boosted photocatalysis fluid processor as claimed in claim 1, wherein the ultraviolet-radiation indicator is positioned in an opening at the bottom of the tube unit.

3. The turbine-boosted photocatalysis fluid processor as claimed in claim 1 or 2, wherein a color scale with different shades of colors is installed beside the ultraviolet-radiation indicator.

4. The turbine-boosted photocatalysis fluid processor as claimed in claim 1 or 2, wherein the ultraviolet-radiation indicator is a screw-like body, the upper side is an illuminated column while the other end is an illuminant plane.

5. The turbine-boosted photocatalysis fluid processor as claimed in claim 1 or 2, wherein the ultraviolet-radiation indicator is made of transparent material with a reagent which converts the ultraviolet-radiation into visible light therein.

6. The turbine-boosted photocatalysis fluid processor as claimed in claim 5 wherein the reagent is a fluorescent phosphor.
